(19) Europäisches Patentamt
European Patent Office
Office européen des brevets

(11) Veröffentlichungsnummer : **0 371 353 B1**

# (12) EUROPÄISCHE PATENTSCHRIFT

(45) Veröffentlichungstag der Patentschrift : **27.11.91 Patentblatt 91/48**

(51) Int. Cl.[5] : **A01J 25/12**, A01J 25/11, A01J 25/08

(21) Anmeldenummer : **89121275.5**

(22) Anmeldetag : **17.11.89**

## (54) Verfahren und Vorrichtung zum Füllen von gedickter Milch in Käseformen.

(30) Priorität : **28.11.88 FI 885507**

(43) Veröffentlichungstag der Anmeldung : **06.06.90 Patentblatt 90/23**

(45) Bekanntmachung des Hinweises auf die Patenterteilung : **27.11.91 Patentblatt 91/48**

(84) Benannte Vertragsstaaten : **AT DE FR IT SE**

(56) Entgegenhaltungen :
**WO-A-84/01261**
**CH-A- 405 807**
**DE-A- 1 913 698**
**DE-A- 2 221 838**
**DE-U- 1 890 832**
**FI-A- 64 260**
**FR-A- 2 404 392**
**NL-C- 81 225**

(73) Patentinhaber : **HACKMAN-MKT OY**
**Emalikatu 10 B**
**SF-04400 Järvenpää (FI)**

(72) Erfinder : **Granberg, Karl-Gustav**
**SF-04170 Paippinen (FI)**
Erfinder : **Kostiainen, Lauri**
**Jalopeurantie 1 F**
**SF-00740 Helsinki (FI)**

(74) Vertreter : **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11 (DE)**

EP 0 371 353 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft Verfahren zum Füllen von gedickter Milch in Käseformen, bei dem Käsereimilch aus einem Käsebehälter in ein Rohrleitungssystem fließt und dabei die in einer vom Käsebehälter ausgehende Hauptleitung des Rohrleitungssystems befindliche Käsereimilch in verschiedene Käseformen verteilt wird, dir zur Trennung der Molke in einem Entmolkungsbehälter angeordnet sind. — Die Erfindung betrifft weiterhin eine Vorrichtung zur Durchführung des Verfahrens.

Die Käseherstellung weist eine Gerinnungsphase auf, während der die Milch in gedickte Milch und Molke getrennt wird. Das Gemisch aus gedickter Milch und Molke fließt über Rohre aus dem Käsebehälter in Käseformen oder Käsereifen, die in einem Entmolkungsbehälter angeordnet sind. Während der Einfüllphase verhindert die Mischung aus gedickter Milch und Molke, daß die gedickte Milch mit Luft in Berührung kommt, was die Qualität der geformten Dickmilchmasse nachteilig beeinflussen könnte. Die gedickte Milch und die Molke werden in den Käseformen mit Hilfe der aus perforierten glechen bestehenden Wände und Böden der Käseformen getrennt, so daß die Molke durch die Perforation aus der Käseform ausfließen kann.

Aus dem DE-U-1890832 ist das Verfahren der eingangs angegebenen Art gemäß dem Obergriff des Anspruchs 1 sowie eine entsprechende Vorrichtung zur Durchführung des Verfahrens gemäß dem Obergriff des Anspruchs 5 bekannt. Dabei wird aus einem Käsebehälter die darin befindliche Käsereimilch über ein Rohrleitungssystem einer mehrzahl von Käseformen zugeführt, welche zur Trennung der Molke in einem Entmolkungsbehälter angeordnet sind. Zu diesem Zweck geht von dem Käsebehälter eine Hauptleitung des Rohrleitungssystems aus, von dem Zweigleitungen abzweigen, an deren Enden dann die Käseformen angeordnet sind. Zur Steuerung der Zufuhr zu den Käseformen sind in die Zweigleitungen jeweils Einrichtungen zur Regelung der Durchflußmenge geschaltet.

Ziel bei dem bekannten Befüllverfahren ist eine gleichmäßige Befüllung der Käseformen. Zu diesem Zweck müssen aber in den Zweigleitungen die jeweiligen Durchflußmengen exakt einreguliert werden, was nur mit einem großen Aufwand möglich ist. Eine individuelle Befüllung der Käseformen ist somit nicht möglich.

Davon ausgehend liegt der Erfindung die **Aufgabe** zugrunde, das bekannte Verfahren sowie die Vorrichtung zur Durchführung des Verfahrens derart weiterzuentwickeln, daß eine individuelle Befüllung der an die Hauptleitung angeschlossenen Käseformen möglich ist.

**Zur Lösung** dieser Aufgabe wird mit der Erfindung vorgeschlagen, daß das vom Käsebehälter kommende Zuflußvolumen größer ist als das über die Zweigleitungen in die Käseformen fließende Abflußvolumen und daß der Überschuß in den Käsebehälter zurückgeführt wird.

Das erfindungsgemäße Verfahren hat den Vorteil, daß die von der Haupleitung abzweigenden Seitenflüsse, die in die einzelnen Käseformen fließen, nicht untereinander mit großer Genauigkeit gleich eingestellt werden müssen. Statt dessen ist es möglich, einen Seitanfluß dann zu unterbrechen, wenn die mit gedickter Milch zu füllende Käseform voll ist. Die Kontinuität des Verfahrens ist teilweise dadurch sichergestellt, daß aus dem Käsebehälter eine überschüssige Menge Käsereimilch ausfließt, wobei der nach der Füllung der Abzweigung übrigbleibende Überschuß in den Käsebehälter zurückgeführt wird, und teilweise dadurch, daß die Möglichkeit besteht, die gefüllten Käseformen zu entleeren oder einzeln durch eine leere Käseform zu ersetzen, so daß das Befüllen der Käseform beginnt, wenn die betreffende Fülleitung wieder geöffnet ist. Ein wesentliches Merkmal hierbei ist, daß das befüllen der anderen Käseformen des Systems mit Käsereimilch ununterbrochen fortgesetzt werden kann, während einige der Käseformen geleert oder ersetzt werden. Weiterhin ist es ein Vorteil der erfindung, daß durch den kontinuierlichen Fluß in der Rohrleitung und die Rückführung des Überschusses zum Käsebehälter die gedickte Milch daran gehindert ist, die Rohrleitung zu verstopfen. Es können eine Vielzahl von Käseformen vorgesehen sein, die eine kleine Größe aufweisen, so daß der Käse nicht vor der Preßphase geschnitten werden muß. Diese Vorgehensweise verhindert das beschwerliche Zerschneiden von halbfertigen Dickmilchmassen. Die kleinsten mit dem erfindungsgemäßen Verfahren noch vorteilhaft herzustellenden Käse haben ungefähr ein Gewicht von 1 kp.

In einer vorteilhaften Weiterbildung wird vorgeschlagen, daß sich die in die Käseformen einmündenden Zweigleitungen einzeln in bestimmten Abständen von an der Hauptleitung angeordneten Abzweigpunkten erstrecken. Die Käseformen bilden demgemäß eine Kette, die ein kontrolliertes Verfahren zur Befüllung der Käseformen und ein einfaches Absperren der Seitenflüsse für die Dauer der Entleerung oder des Austausches der Käseformen ebenso wie ein unabhängiges Wiederanfangen der Seitenflüsse voneinander ermöglicht.

Bei einer bovorzugten Ausführungsform der Erfindung wird das Auffüllen der Käseformen mit gedickter Milch von Sensoren kontrolliert, die den Zufluß in die einzelne Käseform unterbrechen, wenn diese gefüllt ist. Jeder Sensor kann eine für gedickte Milch durchlässige Siebplatte sein, die am oberen Ende der Käseform angeordnet ist, unter das Niveau der Molke im Entmolkungsbehälter getaucht ist und vertikal oszillierend bewegt wird, so daß sie Siebplatte zuerst die Funktion eines Mischers erfüllt, der das Absetzen der gedickten Milch unterstützt und zweitens den Zufluß in die Käseform unterbricht, wenn die Käseform mit der abgesetzten gedickten Milch gefüllt ist und die Siebplatte die Oberfläche der abgesetzten gedickten Milch berührt. Mit der Siebplatte kann beispielsweise ein Ventil verbunden sein, das am Abzweigpunkt der in die Käseform mündenden Abzweigung angeordnet ist, so daß dieses ventil das Absenken der Siebplatte bis in ihre niedrigste Position kontrolliert und den Zufluß solange unterbricht, bis diese Position erreicht ist und die Siebplatte mit der angehäuften gedickten Milch in Kontakt steht. Das Ventil verbleibt bis zum Beginn der Bewegung der Siebplatte und des daran angeschlossenen Ventils in der geschlossenen Stellung.

Ausgehend von einer Vorrichtung mit Käseformen, die in einem Entmolkungsbehälter angeordnet sind und mit einem Rohrleitungssystem, das die Käsereimilch vom Käsebehälter zu den Käseformen leitet, eine sich vom Käsebehälter ausgehende Hauptleitung und eine Vielzahl sich von dieser Hauptleitung sich erstreckenden Zweigleitungen aufweist, wird zur Durchführung des Verfahrens erfindungsgemäß vorgeschlagen, daß das Rohrleitungssystem eine Rückführleitung aufweist, die hinter die Hauptleitung angeschlossen ist und den Überschuß der der Haupleitung zugeführten Käsereimilch in den Käsebehälter zurückführt.

Vorzugsweise erstrecken sich dabei die Zweigleitungen einzeln und in bestimmten Abständen von an der Haupleitung angeordneten Abzweigpunkten.

Eine weitere bevorzugte Weiterbildung der erfindungsgemäßen Vorrichtung zur Durchführung des Verfahrens schlägt vor, daß die mit gedickter Milch zu füllenden Käseformen mit den Füllungsstand kontrollierenden Sensoren ausgestattet sind. Dabei kann der Sensor eine für gedickte Milch durchlässige Siebplatte sein, die am oberen Ende der Käseform angeordnet und in vertikaler Richtung oszillierend bewegbar ist, so daß die Siebplatte vor dem Erreichen des maximalen Füllstandes in der Käseform die Funktion eines Mischers erfüllt, der das Absetzen der gedickten Milch in der Käseform unterstützt, die in denen mit Molke gefüllten Entmolkungsbehälter eingetaucht ist.

Weitere Einzelheiten und Vorteile ergeben sich aus der nachfolgenden Beschreibung der zugehörigen Zeichnungen, in denen eine bevorzugte Ausführungsform einer erfindungsgemäßen Vorrichtung dargestellt ist. In den Zeichnungen zeigen :

Fig. 1 eine Vorrichtung mit einer Kette von Käseformen, die an eine Hauptleitung angeschlossen sind, welche an einen Käsebehälter angeschlossen ist, und

Fig. 2 eine detaillierte Ansicht einer einzelnen Käseform und einer Vorrichtung mit der die Käseform über eine Zweigleitung mit der Hauptleitung verbunden ist.

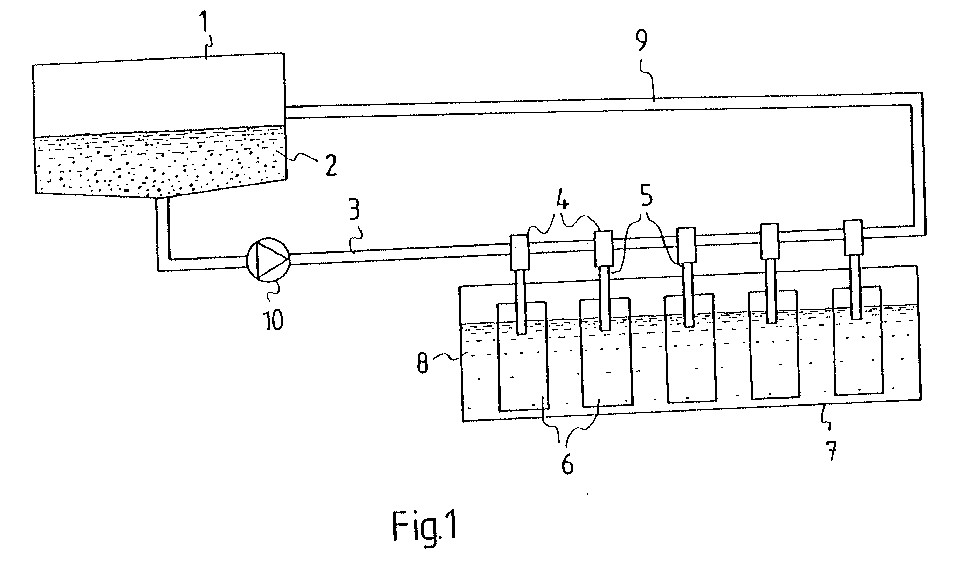

Fig. 1 zeigt eine Vorrichtung, die einen Käsebehälter 1 aufweist, indem Milch in gedickte Milch und Molke getrennt wird. Die Käsereimilch 2 fließt dann von dem Käsebehälter 1 in eine Hauptleitung 3 der Verteilungsleitung, die Zweigleitungen 5 aufweist, welche an fünf aufeinanderfolgenden Abzweigpunkten 4 angeordnet sind und die Käsereimilch in die Käseformen 6 leiten. Demnach weist die Vorrichtung fünf parallel angeordnete Käseformen 6 auf, die in einem üblichen Entmolkungsbehälter 7 angeordnet sind. Die Seitenwände und Böden der Käseformen 6 bestehen aus einer für Flüssigkeiten permeablen Siebplatte und sind wie es in Fig. 1 gezeigt ist, während des Verfahrens zum größten Teil in die Molke 8 getaucht, die von der gedickten Milch getrennt wird. Nach den Abzweigpunkten 4 wird die Hauptleitung als Rückführleitung 9 in den Käsebehälter 1 geführt.

Der Fluß der Käsereimilch 2 wird von einer Pumpe 10 unterstützt, die in der Hauptleitung 3 angeordnet ist und den Fluß in der Hauptleitung 3 und den davon abzweigenden Zweigleitungen 5 sowie den Überschuß, der über die Rückführleitung 9 in den Käsebehälter 1 fließt, antreibt.

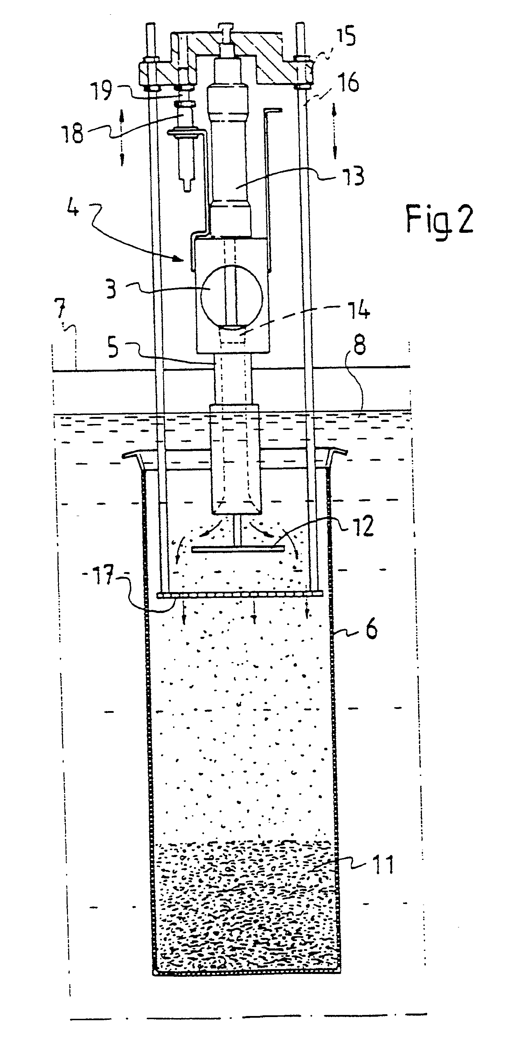

Wie in Fig. 2 dargestellt, setzt sich die gedickte Milch 11 in der Käseform 6 in Form einer Käsesäule ab, die sich vom Boden der Käseform her aufbaut, während die Molke 8 gleichzeitig durch die perforierten Seitenwände der Käseform aus dieser austritt. Während der Aufbauphase wird den im Entmolkungsbehälter 7 angeordneten Käseformen 6 von oben Käsereimilch zugeführt, so daß sich die gedickte Milch mit Hilfe der Schwerkraft absetzt. Bei einer Konstruktion mit einer Pumpe ist es nicht notwendig, den Käsebehälter 1 oberhalb des Niveaus des Entmolkungsbehälters 7 anzuordnen, wie es im Rahmen der Erfindung vorgesehen ist.

In Fig. 2 ist detailliert eine, in einer Käseform 6 endende Zweigleitung 5 und ihre Verbindung mit der Hauptleitung 3 an der Abzweigung 4 dargestellt. Die Zweigleitung 5 reicht in einer geeigneten Weise bis unterhalb des Niveaus der Molke 8 im Entmolkungsbehälter 7. An ihrem Ende ist eine unbewegliche feste Verteilungsplatte 12 angeordnet. Der Abzweigpunkt 4 weist oberhalb der Hauptleitung 3 einen Hydraulikzylinder 13 auf, der in einer Einrichtung ein- und ausfahrbar ist, die einen Ventilzapfen 14 und einen Kopfrahmen 15 mit daran angeordneten Stützbalken 16 aufweist. Die Stützbalken 16 halten eine horizontal angeordnete Siebplatte 17, die unter der Verteilungsplatte 12 in der Käseform 6 angeordnet ist. In der Fig. 2 ist die Einrichtung in ihrer untersten Position gezeigt, in der der Ventilzapfen 14 das Ende der Zweigleitung 5 verschließt, weiterhin weist die Einrichtung einen parallel zum Hydraulikzylinder 13 angeordneten unbeweglichen Sensor 18 auf. Der Sensor 18 berührt eine am Rahmen 15 angeordnete einstellbare Schraube 19, wenn sich die bewegbare Einrichtung in ihrer untersten Position befindet, wie es in Fig. 2 dargestellt ist.

Während die Vorrichtung zum Einfüllen von gedickter Milch in Käseformen betrieben wird, wird die oben beschriebene Einrichtung mit dem Ventilzapfen 14 und der von den Stützbalken 16 gehaltenen Siebplatte 17 durch den Hydraulikzylinder 13 in vertikaler Richtung hin- und herbewegt. Wird nun das Ende der Zweigleitung 5 geöffnet, fließt die Käsereimilch über die Zweigleitung in die Käseform 6, in der sich die gedickte Milch, die über die Verteilungsplatte 12 fließt und die Siebplatte 17 durchströmt mit Hilfe der Schwerkraft absetzt. Die Aufgabe der Hin- und Herbewegung der Siebplatte 17 ist es, sowohl das Absetzen der Käsereimilch 8 und auch seine Anordnung auf dem Boden der Käseform zu vergleichmäßigen. Zusätzlich erfüllt die Siebplatte 17 die Funktion eines Sensors, der den Zufluß der Käsereimilch in die Käseform unterbricht, wenn die Käseform 6 gefüllt ist. Diese Unterbrechung wird dadurch ausgeführt, daß die in der Käseform 6 akkumulierte gedickte Milch 11 eine ausreichende Höhe erreicht, die die Siebplatte 17 daran hindert ihre unterste Position einzunehmen, so daß der Kontakt zwischen der Schraube 19 am Rahmen 15 und dem Sensor 18 unterbrochen wird. In dieser Stellung schaltet der Sensor 18 den Hydraulikzylinder 13 ab, so daß die Auf- und Abbewegung unterbrochen wird und der Ventilzapfen 14 die Zweigleitung 5 verschließt. In dieser Stellung kann die gefüllte Käseform 6 geleert oder durch eine andere, leere Käseform ersetzt werden ohne die kontinuierliche Befüllung der anderen Formen der Vorrichtung zu unterbrechen. Sobald die Käseform geleert oder ersetzt ist, kann das Einfließen der Käsereimilch in die Käseform durch Niedereinschalten des Zylinders 13 fortgeführt werden.

Das Ausfließen der Käsereimilch wird solange in der oben beschriebenen Methode fortgesetzt, bis der Käsebehälter 1 leer ist. während dieser Zeit können die einzelnen Käseformen 6 mehrmals geleert oder ersetzt werden. Die Auffüllzeitpunkte der Käseformen sind vorteilhafterweise zeitlich versetzt, so daß die meisten der Käseformen kontinuierlich gefüllt werden.

Es ist für den Fachmann erkennbar, daß die verschiedenen Ausgestaltungen der Erfindung nicht auf das oben beschriebene Beispiel beschränkt sind, sondern vielmehr können diese im Bereich der Ansprüche variieren. Die Konstruktion der Vorrichtung kann beispielsweise von der in Fig. 2 dargestellten Form dadurch ab weichen, daß die Bewegungen des Ventilzapfens 14 und der Siebplatte 17 unabhängig voneinander sind. Die Anzahl der Käseformen 6 der Vorrichtung kann ebenfalls in weiten Grenzen variieren. In der Praxis hat sich eine Mindestanzahl von drei Formen als vorteilhaft erwiesen, da dann eine vorteilhafte Situation erreicht werden kann wenn die Vorrichtung mit einer Vielzahl von kleinen Gefäßformen verwendet wird, so daß ein Teilen der in den Formen produzierten halbfertigen Käse während des Fortgangs des Prozesses nicht notwendig ist. Die Käsegewichte können in einem Bereich von 1 bis zu 80 kg variieren. Das bevorzugte Gewicht liegt in einem Bereich von ungefähr 1 bis zu 5 kg.

## Patentansprüche

1. Verfahren zum Füllen von gedickter Milch (11) in Käseformen (6), bei dem Käsereimilch (2) aus einem Käsebehälter (1) in ein Rohrleitungssystem (3, 5, 9) fließt und dabei die in einer vom Käsebehälter (1) ausgehende Hauptleitung (3) des Rohrleitungssystems (3, 5, 9) befindliche Käsereimilch (2) in verschiedene Käseformen (6) verteilt wird, die zur Trennung der Molke (8) in einem Entmolkungsbehälter (7) angeordnet sind, **dadurch gekennzeichnet,** daß das vom Käsebehälter (1) kommende Zuflußvolumen größer ist als das über Zweigleitungen (5) in die Käseformen (6) fließende Abflußvolumen und daß der Überschuß in den Käsebehälter (1) zurückgeführt wird.

2. Verfahren nach Anspruch 1, dadurch gekennzeichnet, daß sich die in die Käseformen (6) einmündenden Zweigleitungen (5) einzeln in bestimmten Abständen von an der Hauptleitung (3) angeordneten Abzweigpunkten (4) erstrecken.

3. Verfahren nach Anspruch 1 oder 2, dadurch gekennzeichnet, daß das Auffüllen der käseformen (6) mit gedickter Milch (11) von Sensoren (17) kontrolliert wird, die den Zufluß in die einzelne Käseform (6) unterbrechen, wenn diese gefüllt ist.

4. Verfahren nach Anspruch 3, dadurch gekennzeichnet, daß jeder Sensor eine für gedickte Milch (11) durchlässige Siebplatte (17) ist, die am oberen Ende der Käseform (6) angeordnet ist, unter das Niveau der Molke (8) im Entmolkungsbehälter (7) getaucht ist und vertikal oszillierend bewegt wird, so daß die Siebplatte (17) zuerst die Funktion eines Mischers erfüllt, der das Absetzen der gedickten Milch (11) unterstützt und zweitens den Zufluß in die Käseform (6) unterbricht, wenn die Käseform (6) mit der abgesetzten gedickten Milch (11) gefüllt ist und die Siebplatte (17) die Oberfläche der abgesetzten gedickten Milch (11) berührt.

5. Vorrichtung zur Durchführung des Verfahrens nach einem der Ansprüche 1 bis 4, mit Käseformen (6), die in einem Entmolkungsbehälter (7) angeordnet sind und mit einem Rohrleitungssystem (3, 5, 9), das die Käsereimilch (2) vom Käsebehälter (1) zu den Käseformen (6) leitet, welches eine vom Käsebehälter (1) ausgehende Hauptleitung (3) und eine Vielzahl sich von dieser Hauptleitung (3) erstreckende Zweigleitungen (5) aufweist, dadurch gekennzeichnet, daß das Rohrleitungssystem (3, 5, 9) eine Rückführleitung (9) aufweist, die hinter die Hauptleitung (3) angeschlossen ist und den Überschuß der der Hauptleitung (3) zugeführten Käsereimilch (2) in den Käsebehälter (1) zurückführt.

6. Vorrichtung nach Anspruch 5, dadurch gekennzeichnet, daß sich die Zweigleitungen (5) einzeln und in bestimmten Abständen von an der Hauptleitung (3) angeordneten Abzweigpunkten (4) erstrecken.

7. Vorrichtung nach Anspruch 5 oder 6, dadurch gekennzeichnet, daß die mit gedickter Milch (11) zu füllenden Käseformen (6) mit den Füllungsstand kontrollierenden Sensoren ausgestettet sind.

8. Vorrichtung nach Anspruch 7, dadurch gekennzeichnet, daß der Sensor eine für gedickte Milch (11) durchlässige Siebplatte (17) ist, die am oberen Ende der Käseform (6) angeordnet und in vertikaler Richtung oszillierend bewegbar ist, so daß die Siebplatte (17) vor dem Erreichen des maximalen Füllstandes in der Käseform (6) die Funktion eines Mischers erfüllt, der das Absetzen der gedickten Milch (11) in der Käseform (6) unterstützt, die in denen mit Molke (8) gefüllten Entmolkungsbehälter (7) eingetaucht ist.

## Claims

1. A method of filling cheese moulds (6) with curds (11), in which method cheesemaking milk (2) flows from a cheese tank (1) into a pipeline system (3, 5, 9) and the cheesemaking milk (2) situated in a main line (3) of the pipeline system (3, 5, 9) extending from the cheese tank (1) is at the same time distributed into different cheese moulds (6) disposed in a whey extraction tank (7) for separation of the whey (8), characterised in that the inflow volume coming from the cheese tank (1) is greater than the outflow volume flowing via branch lines (5) into the cheese moulds (6) and in that the surplus is returned to the cheese tank (1).

2. A method according to claim 1, characterised in that the branch lines (5) leading into the cheese moulds (6) extend individually at specific distances from branch-off points (4) on the main line (3).

3. A method according to claim 1 or 2, characterised in that the filling of the cheese moulds (6) with curds (11) is monitored by sensors (17) which interrupt the inflow to the individual cheese mould (6) when the latter has been filled.

4. A method according to claim 3, characterised in that each sensor is a screen plate (17) which is permeable to curds (11) and which is disposed at the top end of the cheese mould (6), is immersed beneath the level of the whey (8) in the whey extraction tank (7) and is moved with a vertical oscillation so that the screen plate (17) first performs the function of a mixer which assists the settling of the curds (11) and secondly interrupts the inflow into the cheese mould (6) when the latter has been filled with the settled curds (11) and the screen plate (17) contacts the surface of the settled curds (11).

5. Apparatus for performing the method according to any one of claims 1 to 4, comprising cheese moulds (6) disposed in a whey extraction tank (7) and comprising a pipeline system (3, 5, 9) which feeds the cheesemaking milk (2) from the cheese tank (1) to the cheese moulds (6), said pipeline system comprising a main line (3) extending from the cheese tank (1) and a plurality of branch lines (5) extending from said main line (3), characterised in that the pipeline system (3, 5, 9) comprises a return line (9) connected downstream of the main line (3) to return to the cheese tank (1) the surplus cheesemaking milk (2) fed to the main line (3).

6. Apparatus according to claim 5, characterised in that the branch lines (5) extend individually and at specific distances from branch points (4) disposed on the main line (3).

7. Apparatus according to claim 5 or 6, characterised in that the cheese moulds (6) for filling with curds (11) are equipped with sensors monitoring the filling level.

8. Apparatus according to claim 7, characterised in that the sensor is a screen plate (17) which is permeable to curds (11) and which is disposed at the top end of the cheese mould (8) and is movable with a vertical oscillation so that the screen plate (17) performs the function of a mixer before the maximum filling level is reached in the cheese mould (6), such mixer assisting the settling of the curds (11) in the cheese mould (6), said cheese mould (6) being immersed in the whey extraction tank (7) filled with whey (8).

## Revendications

1. Procédé destiné à remplir de lait caillé (11) des moules à fromage (6), dans lequel le lait (2) de fromagerie coule à partir d'un réservoir (1) de fromage dans un système de conduites, (3, 5, 9) et, de cette manière, le lait (2) de fromagerie se trouvant dans une conduite principale (3), sortant du réservoir (1) de fromage, du système de conduites (3, 5, 9) est réparti dans plusieurs moules à fromage (6) qui sont disposés dans un réservoir d'égouttage (7) pour séparer le petit lait (8), **caractérisé en ce que**, le volume amené provenant du réservoir (1) de fromage est supérieur au volume sortant vers les moules à fromage (6) par des conduites de déviation (5) et en ce que l'excès est renvoyé dans le réservoir (1) de fromage.

2. Procédé selon la revendication 1, caractérisé en ce que les conduites de déviation (5) débouchant dans les moules à fromage (6) s'étendent individuellement à des distances définies par rapport à des points de déviations (4) disposés sur la conduite principale (3).

3. Procédé selon la revendication 1 ou 2, caractérisé en ce que le remplissage des moules à fromage (6) à l'aide de lait caillé (11) est contrôlé par des capteurs (17) qui interrompent l'amenée dans les moules à fromage individuels (6) lorsque ceux-ci sont remplis.

4. Procédé selon la revendication 3, caractérisé en ce que chaque capteur est une plaque de filtrage (17) perméable au lait caillé (11) qui est disposée à l'extrémité supérieure du moule à fromage (6), est plongée au-dessus du niveau du petit lait (8) dans le réservoir (7) d'égouttage et est déplacée en oscillation à la verticale de telle manière que la plaque de filtrage (17) remplit en premier lieu la fonction d'un mélangeur, qui favorise le dépôt du lait caillé (11), et interrompt en deuxième lieu l'amenée vers le moule à fromage (6) lorsque le moule à fromage (6) est rempli du lait caillé déposé (11) et que la plaque de filtrage (17) vient en contact avec la surface du lait caillé déposé (11).

5. Dispositif destiné à la mise en oeuvre du procédé selon l'une des revendications 1 à 4, comportant des moules à fromage (6) qui sont disposés dans un récipient d'égouttage (7) et un système de conduites (3, 5, 9) qui conduit le lait de fromagerie (2) depuis le récipient de fromage (1) vers les moules à fromage (6), et qui comporte une conduite principale (3) sortant du réservoir à fromage (1) et une multiplicité de conduites de déviation (5) s'étendant à partir de cette conduite principale (3), caractérisé en ce que le système de conduites (3, 5, 9) comporte une conduite de renvoi (9) qui est raccordée derrière la conduite principale (3) et qui ramène dans le réservoir à fromage (1) l'excès de lait de fromagerie (2) amené à la conduite principale (3).

6. Dispositif selon la revendication 3, caractérisé en ce que les conduites de déviation (5) s'étendent de façon individuelle et à des distances définies à partir de points de déviation (4) disposés sur la conduite principale (3).

7. Dispositif selon la revendication 5 ou 6, caractérisé en ce que les moules à fromage (6) à remplir du lait caillé (11) sont équipés de capteurs contrôlant l'état de remplissage.

8. Dispositif selon la revendication 7, caractérisé en ce que le capteur est une plaque de filtrage (17) perméable au lait caillé (11) qui est disposée à l'extrémité supérieure du moule à fromage (6) et est mobile en oscillation en direction verticale de telle manière que la plaque de filtrage (17) remplit, jusqu'à ce que l'état rempli du moule à fromage soit atteint, la fonction d'un mélangeur, qui favorise le dépôt du lait caillé (11) dans le moule à fromage (6) qui est plongé dans le réservoir d'égouttage (7) rempli de petit-lait.

1
2
3
4
5
6
7
8
9
10

Fig.1

15
16
19
18
13
4
Fig.2
3
14
7
5
8
12
17
6
11